(19) Europäisches Patentamt
European Patent Office
Office européen des brevets

(11) Veröffentlichungsnummer: **0 260 562 B1**

(12) # EUROPÄISCHE PATENTSCHRIFT

(45) Veröffentlichungstag der Patentschrift: **07.08.91**

(51) Int. Cl.⁵: **C09B 45/16**, D06P 1/10

(21) Anmeldenummer: **87113032.4**

(22) Anmeldetag: **07.09.87**

Die Akte enthält technische Angaben, die nach dem Eingang der Anmeldung eingereicht wurden und die nicht in dieser Patentschrift enthalten sind.

(54) **Asymmetrische 1:2-Chromkoplexfarbstoffe.**

(30) Priorität: **18.09.86 DE 3631752**

(43) Veröffentlichungstag der Anmeldung:
**23.03.88 Patentblatt 88/12**

(45) Bekanntmachung des Hinweises auf die Patenterteilung:
**07.08.91 Patentblatt 91/32**

(84) Benannte Vertragsstaaten:
**CH DE ES FR GB IT LI**

(56) Entgegenhaltungen:
**DE-B- 1 254 785**
**FR-A- 2 262 084**
**FR-A- 2 262 687**
**GB-A- 2 027 734**

(73) Patentinhaber: **BAYER AG**
**W-5090 Leverkusen 1 Bayerwerk(DE)**

(72) Erfinder: **Mennicke, Winfried, Dr.**
**Steglitzer Str. 8**
**W-5090 Leverkusen 1(DE)**

EP 0 260 562 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der GB-A-2 027 734 sind Chromkomplexfarbstoffe bekannt, die bei guter Licht- und Schweißechtheit Nachteile in der Diffusionsechtheit aufweisen.

Gegenstand der vorliegenden Erfindung sind 1:2-Chromkomplexfarbstoffe der Formel

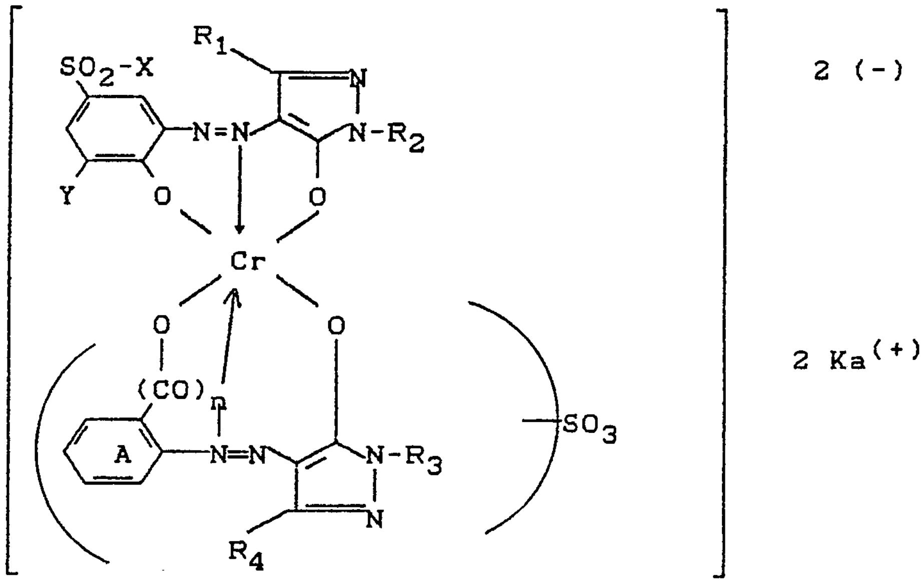

(I)

worin

- X — $NH_2$, durch Alkyl, Cycloalkyl, Aralkyl oder Aryl mono- oder disubstituiertes $NH_2$, Aryloxy oder Alkyl,
- Y — $NO_2$ oder Cl,
- $R_1$, $R_4$ — Alkyl, Aryl, COOH, Carbamoyl, CN oder Carbonsäureester,
- $R_2$, $R_3$ — H, Alkyl oder Aryl,
- n — 0 oder 1 und
- $Ka^{(+)}$ — ein Kation bedeuten,

die Sulfogruppe an Ring A oder an $R_3$, falls dieses für Aryl steht, gebunden ist, und Ring A und die Reste $R_2$, $R_3$, sofern diese für Aryl stehen, gegebenenfalls substituiert sind, sowie die durch Mischchromierung der entsprechenden Ausgangsfarbstoffe erhältlichen Gemische.

Als Substituenten für A und/oder einen der Reste $R_2$ und $R_3$, sofern sie für Aryl stehen, kommen vorzugsweise Acylamino, Sulfamoyl, Carbamoyl, Alkylsulfonyl, Arylsulfonyl, Alkyl, Alkoxy, $NO_2$ und Cl in Frage.

Bevorzugte Alkyl- und Alkoxygruppen sind solche mit 1 - 4 C-Atomen, die gegebenenfalls weiter substituiert sein können, beispielsweise durch CN, Cl, OH, $C_1$-$C_4$-Alkoxy oder gegebenenfalls substituiertes Phenyl. Besonders bevorzugt sind Methyl oder Methoxy.

Bevorzugte Cycloalkylgruppen sind Cyclohexyl oder Methylcyclohexyl, und als Aralkylgruppen kommen vorzugsweise Benzyl oder Phenethyl in Frage.

Acylamino steht vorzugsweise für $C_1$-$C_4$-Alkylcarbonylamino, $C_1$-$C_4$-Alkoxycarbonylamino, $C_1$-$C_4$-Alkylsulfonylamino, Arylcarbonylamino oder Arylsulfonylamino.

Die Sulfamoyl- oder Carbamoylgruppen können mono- oder disubstituiert sein beispielsweise durch gegebenenfalls substituiertes $C_1$-$C_4$-Alkyl oder durch Aryl.

Bevorzugte Arylreste sind insbesondere gegebenenfalls substituierte Phenylreste mit Substituenten wie Cl, Br, $NO_2$, $C_1$-$C_4$-Alkyl oder $C_1$-$C_4$-Alkoxy.

Das durch das Symbol $Ka^{(+)}$ dargestellte Kation ist vorzugsweise ein Alkaliion, insbesondere ein Lithium-, Natrium- oder Kaliumion, ein Ammoniumion oder das Kation eines organischen Amins, insbesondere eines Mono-, Di-oder Tris-alkyl- oder -alkanolamins.

Bevorzugte Farbstoffe entsprechen den Formeln (II) und insbesondere (III),

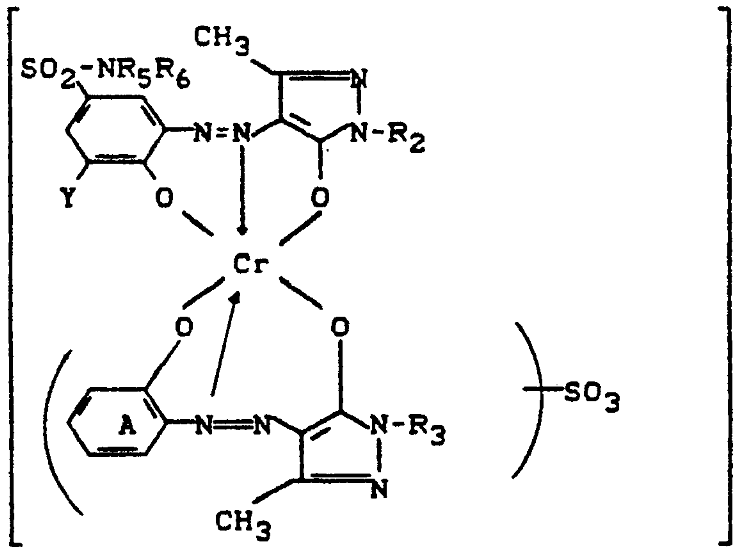

2 (-)

(II)

2 Ka(+)

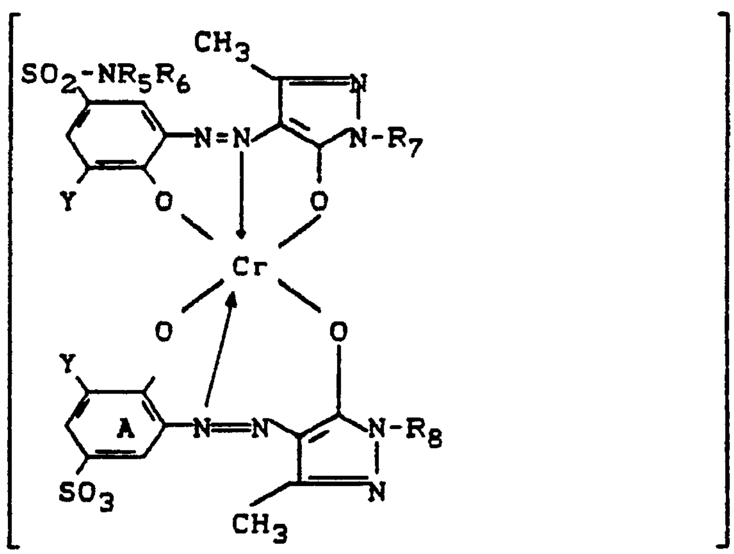

2 (-)

(III)

2 Ka(+)

wobei
$R_5$ für H oder Alkyl,
$R_6$ für H, Alkyl oder Aryl und
$R_7$ und $R_8$ für H oder

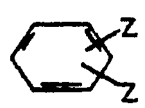

stehen, und Z, Z' = H, Cl oder $CH_3$, und beide Y der Formel (III) jeweils Cl oder $NO_2$ bedeuten.

Bevorzugte Farbstoffe der Formel (III) sind solche, bei denen Y $NO_2$ ist, und $R_7$ und $R_8$ gleich sind.

Zur Herstellung der erfindungsgemäßen Farbstoffe der Formel (I) wird ein Farbstoff der Formel

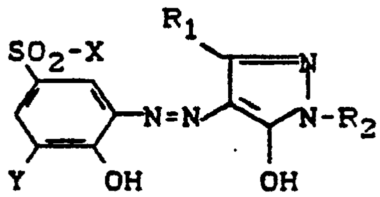

(IV)

oder

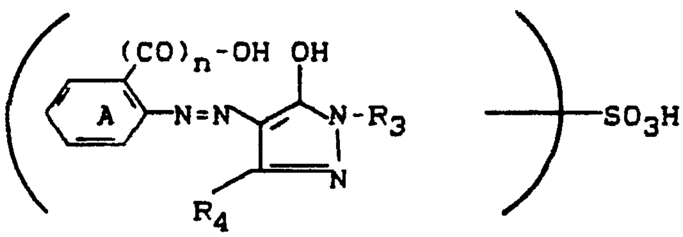

(V)

in an sich bekannter Weise mit einem chromabgebenden Mittel in den 1:1-Chromkomplex überführt und dieser in Gegenwart von säurebindenden Mitteln mit dem entsprechenden nichtmetallisierten Farbstoff der Formel (V) bzw. (IV) umgesetzt. Chromhaltiger und chromfreier Farbstoff werden vorzugsweise in stöchiometrischen Mengen eingesetzt, wobei sich ein Überschuß von ersterem weniger nachteilig auswirkt als ein Überschuß an metallfreiem Farbstoff.

Eine weitere Möglichkeit zur Herstellung der erfindungsgemäßen Farbstoffe der Formel (I) besteht darin, in an sich ebenfalls bekannter Weise ein Gemisch von je einem Farbstoff der Formel (IV) und (V) mit chromabgebenden Mitteln in Gegenwart von säurebindenden Mitteln zu behandeln. Bei dieser sogenannten Mischchromierung braucht das Verhältnis der beiden Ausgangsfarbstoffe nicht stöchiometrisch zu sein, sondern kann in weiten Grenzen schwanken, beispielsweise von 70:30 bis 30:70, vorzugsweise in den Grenzen von 60:40 bis 40:60. Die Chromierung erfolgt bei Temperaturen von 80-145 °C, vorzugsweise bei 100 °C, und bei pH 4-10, vorzugsweise 6-8, und liefert neben den asymmetrischen 1:2-Chromkomplexen der Formel (I) als Nebenprodukte auch die beiden symmetrischen 1:2-Chromkomplexe der Formel (VI) und (VIII):

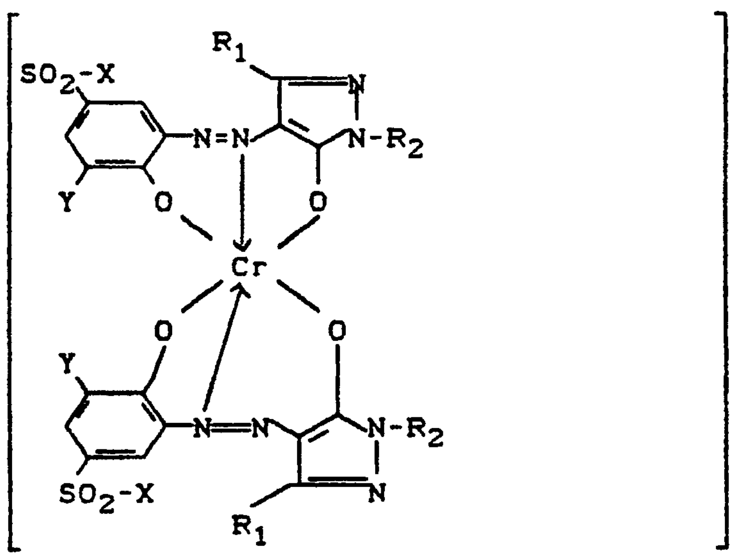

$^{(-)}$

(VI)

$2\ Ka^{(+)}$

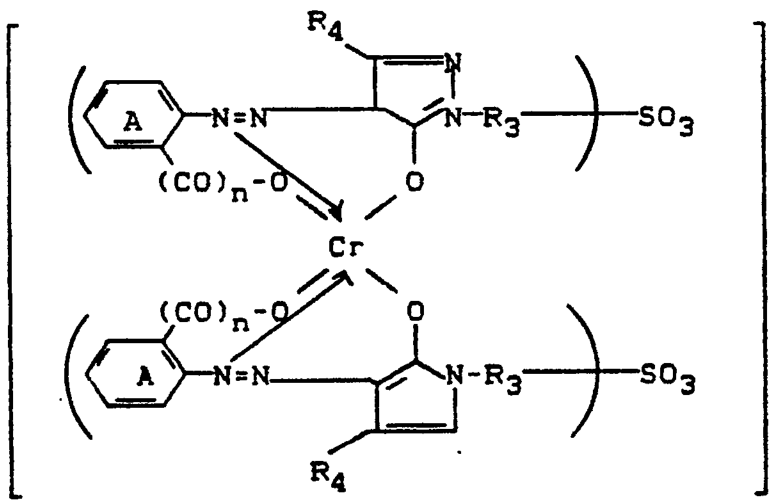

$3^{(-)}$

$3\ Ka^{(+)}$

(VII)

Als chromabgebende Mittel kommen hauptsächlich die Chromsalze von anorganischen oder organischen Säuren in Frage, beispielsweise bei der Bildung von Chrom-1:1-Komplexen Chromfluorid, Chromchlorid, Chromsulfat oder Chromformiat, bei der Bildung von 1:2-Chromkomplexen Chromchlorid, Chromacetat, Kalium oder Ammoniumchromsulfat, Chromsalicylsäure, ferner Chromtrioxid und Natrium-oder Kaliumchromat bzw. -bichromat.

Geeignete Säureaceptoren, wie sie bei der Herstellung der 1:2-Chromkomplexe benötigt werden, sind beispielsweise Hydroxide oder Carbonate von Alkalimetallen, wie Lithium-, Natrium-, Kaliumhydroxid oder -carbonat, Ammoniak oder organische Amine, wie Mono-, Di-, Triethylamin, Mono-, Di- oder Triethanolamin, oder Tetraalkylammoniumhydroxide, wie Tetramethylammoniumhydroxid. Vorzugsweise setzt man den Säureacceptor so zu, daß der 1:2-Chromkomplex bei einem konstanten pH-Wert gebildet wird.

Die Umsetzungen zu den 1:1-Chrom- und den 1:2-Chromkomplexen können zur Beschleunigung der Reaktion auch in Gegenwart organischer Lösungsmittel durchgeführt werden. Geeignete organische Lösungsmittel sind beispielsweise niedere Alkohole, wie Ethanol, Ketone, wie Ethylmethylketon, Carbonamide, wie Formamid, N-Methylpyrrolidon, Glykole, wie Ethylenglykol, 1,2-Propylenglykol, oder vorzugsweise deren Mono- $C_1$-$C_4$-alkylether, wie Ethylglykol, 1-Ethoxy-2-propanol.

Von besonderer färberischer Bedeutung sind Gemische der erfindungsgemäßen 1:2-Chromkomplexfarbstoffe der Formel (I) mit ihren bei der Mischchromierung zwangsläufig entstehenden symmetrischen 1:2-Chromkomplexfarbstoffen der Formel (VI) und (VII), die ebenfalls Gegenstand der Erfindung sind. Von derartigen Gemischen sind wiederum bevorzugt die Gemische aus den Farbstoffen der Formel (II) und insbesondere die Gemische aus den Farbstoffen der Formel (III) mit den jeweils dazugehörigen symmetrischen 1:2-Chromkomplexfarbstoffen.

Die Azofarbstoffe der Formel (IV) werden in bekannter Weise durch Kuppeln von diazotierten Aminen der Formel (VIII) auf Pyrazolone der Formel (IX) erhalten, diejenigen der Formel (V) durch Kuppeln von diazotierten Aminen der Formel (X) auf Pyrazolone der Formel (XI),

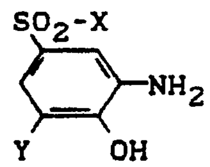

(VIII)

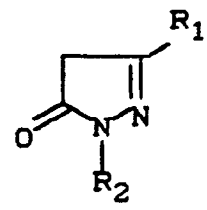

(XI)

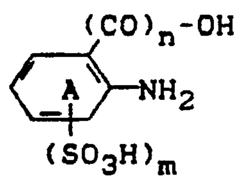

(X)

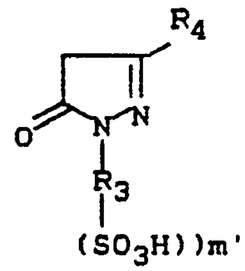

(XI)

wobei

m, m′ 0 oder 1 und

m + m′ 1 ist, und $R_3$ für Aryl steht, wenn m′ = 1.

Die 2-Amino-1-hydroxybenzole der Formel (VIII) sind zum Teil bekannt und auf üblichen Wegen zugänglich. Beispielsweise werden 4-Nitro- oder 4-Chlor-2-amino-1-hydroxybenzol-6-sulfonsäure mit Acetanhydrid acetyliert und anschließend mit $POCl_3/PCl_5$ in die entsprechenden 6-Sulfochloride überführt. Die Umsetzung der Sulfochloride mit den Aminen $HNR_5R_6$ und die nachfolgende Verseifung der Acetaminogruppe oder die Veresterung der Sulfochloride mit Phenolen und die nachfolgende Verseifung der Acetaminogruppe ergeben die 6-Sulfonamid- bzw. 6-Phenoxysulfonyl-Derivate des 4-Nitro- und 4-Chlor-2-amino-1-hyroxybenzols. Die Reduktion der Sulfochloride zu den Sulfinsäuren, die Einwirkung von Alkylierungsmitteln wie Dimethylsulfat, Diethylsulfat oder Ethylenoxid und die Abspaltung der Acetylgruppe führen zu den 6-Alkylsulfonyl-4-nitro- und -4-chlor-2-amino-1-hydroxybenzolen. Beispiele solcher 2-Amino-1-hydroxybenzole der Formel (VIII) sind 6-Nitro- und 6-Chlor-2-amino-1-hydroxybenzol-6-sulfonamid, -6-methylsulfonamid, -6-ethylsulfonamid, -6-propylsulfonamid, -6-isopropylsulfonamid, -6-butylsulfonamid, -6-(2-hydroxyethyl)sulfonamid, -6-phenylsulfonamid, -6-N-methyl-N-phenylsulfonamid, -6-di-methylsulfonamid, -6-diethylsulfonamid, -6-phenoxysulfonyl, -6-(4-methylphenoxy)sulfonyl, -6-(4-chlorphenoxy)-sulfonyl, -6-methylsulfonyl, -6-ethylsulfonyl, -6-propylsulfonyl, -6-butylsulfonyl und -6-(2-hydroxyethyl)sulfonyl.

Geeignete Diazoverbindungen der Formel (X) sind beispielsweise:

2-Aminobenzoesäure,
2-Aminobenzoesäure-4- oder -5-sulfonsäure,
2-Aminobenzoesäure-4- oder -5-sulfonsäure,
4-, 5- oder 6-Chlor-2-aminobenzoesäure,
4- oder 5-Nitro-2-aminobenzoesäure,
2-Amino-1-hydroxybenzol,
4- oder 5-Chlor-2-amino-1-hydroxybenzol,
4,6-Dichlor-2-amino-1-hydroxybenzol,
4- oder 5-Nitro-2-amino-1-hydroxybenzol,
4,6-Dinitro-2-amino-1-hydroxybenzol,
4-Chlor-, 4-Methyl- oder 4-Acetamino-6-nitro-2-amino-1-hydroxybenzol,
6-Methyl-, 6-Acetamino- oder 6-Chlor-4-nitro-2-amino-1-hydroxybenzol,

6-Acetamino-4-chlor-2-amino-1-hydroxybenzol,
4-Chlor-5-nitro-2-amino-1-hydroxybenzol,
4- oder 5-Methyl-2-amino-1-hydroxybenzol,
4-Methoxy-2-amino-1-hydroxybenzol,
2-Amino-1-hydroxybenzol-4- oder -5-methylsulfon,
2-Amino-1-hydroxybenzol-4- oder -5-sulfonamid,
2-Amino-1-hydroxybenzol-4- oder -5-sulfanilid,
4-Nitro-2-amino-1-hydroxybenzol-5- oder -6-sulfonamid,
2-Amino-1-hydroxybenzol-4- oder -5-sulfonsäure,
4-Nitro-2-amino-1-hydroxybenzol-5- oder -6-sulfonsäure,
5-Nitro oder 6-Nitro-2-amino-1-hydroxybenzol-4-sulfonsäure,
6-Chlor-2-amino-1-hydroxybenzol-4-sulfonsäure,
4-Chlor-2-amino-1-hydroxybenzol-6-sulfonsäure,
4-Methyl-2-amino-1-hydroxybenzol-5- oder -6-sulfonsäure,
1-Amino-2-hydroxynaphthalin-4-sulfonsäure,
6-Nitro-1-amino-1-hydroxynaphthalin-4-sulfonsäure.

Geeignete Pyrazolone der Formel (IX) und (XI) sind beispielsweise:
1-Phenyl-3-methyl-5-pyrazolon, 1,3-Diphenyl-5-pyrazolon, 3-Methyl-5-pyrazolon, 3-Phenyl-5-prazolon, 1,3-Dimethyl-5-pyrazolon, 1-Ethyl-3-methyl-5-pyrazolon, 1-Propyl-5-pyrazolon, 1-(2-Hydroxyethyl)-3-methyl-5-pyrazolon, 1-Phenyl-3-carbamoyl-5-pyrazolon, 1-Phenyl-3-cyano-5-pyrazolon, 1-Phenyl-3-ethoxycarbonyl-5-pyrazolon, 1-(2-, 3- oder 4-Chlorphenyl)-3-methyl-5-pyrazolon, 1(2-, 3-oder 4-Methylphenyl)-3-methyl-5-pyrazolon, 1-(2-, 3-oder 4-Methoxyphenyl)-3-methyl-5-pyrazlon, 1-(2-Ethylphenyl)-3-methyl-5-pyrazolon, 1-(2,5-Dichlorphenyl)-3-methyl-5-pyrazolon, 1-(2-Ethoxy-5-methylphenyl)-3-methyl-5-pyrazolon, 1-Naphthyl-(1′)-3-methyl-5-pyrazolon, 1-(2-, 3-oder 4-Sulfophenyl)-3-methyl-5-pyrazolon, 1-(Phenyl-2-, -3- oder -4-sulfonamid)-3-methyl-5-pyrazolon, 1-(Phenyl-2-, -3- oder -4-carbonsäure)-3-methyl-5-pyrazolon, 1-(2-Chlor-4-oder -5-sulfophenyl)-3-methyl-5-pyrazolon, 1-(4-, 5-, 6-, 7-oder 8-Sulfonaphthyl-(1′)-3-methyl-5-pyrazolon oder 1-(1-, 5-, 6-, 7- der 8-Sulfonaphthyl-(2′))-3-methyl-5-pyrazolon.

Am Ende der Synthese liegen die erfindungsgemäßen 1:2-Chromkomplexfarbstoffe der Formel (I) - gegebenenfalls in Begleitung ihrer symmetrischen 1:2-Chromkomplexfarbstoffe - als Salz der Komplexsäure und der an ihr gebundenen $SO_3H$-Gruppe mit den oben erwähnten Säureacceptoren vor, beispielsweise als Alkalisalze bei Verwendung von Alkalihydroxiden oder -carbonaten oder als Ammoniumsalze bei Verwendung von Ammoniak, Aminen oder Tetraalkylammoniumhydroxiden. Zur Neutralisation können auch langkettige hydrophobe Amine Verwendung finden, die mit 1:2-Chromkomplexfarbstoffen in Wasser schwer lösliche Salze bilden, so daß sie nur durch Zusatz von organischen Lösungsmitteln oder in diesen Lösungsmitteln allein gelöst werden können. Derartige Amine sind beispielsweise N-Ethyl-N-hexylamin, Dodecylamin, Oleylamin, Cyclohexylamin, N,N-Dicyclohexylamin, N,N′-Diphenylguanidin oder N,N′-Ditolylguanidin.

Die so hergestellten 1:2-Metallkomplexfarbstoffe können durch Aussalzen mit Alkalisalzen, Eindampfen auf der Walze oder Sprühtrocknung isoliert und mit den üblichen Hilfs- und Stellmitteln zu wasserlöslichen Präparationen verarbeitet werden.

Die Zubereitung zu flüssigen Präparationen unter Verwendung von organischen Lösungsmitteln gegebenenfalls im Gemisch mit Wasser und gegebenenfalls unter Zusatz von Lösungsvermittlern, wie beispielsweise Harnstoff, ist ebenfalls möglich und insofern empfehlenswert, als man die Synthese der 1:2-Metallkomplexfarbstoffe oder zumindestens den letzten Schritt diese Synthese und die Herstellung der Farbstofflösungen in einem Topf ohne Zwischenisolierung vollziehen kann. Besonders vorteilhaft ist das Verfahren de DE-OS 24 43 483, bei dem man u.a. 1:2-Chromkomplexfarbstoffe in Gegenwart von alkalisch wirkenden Lithiumsalzen herstellt und dabei gleichzeitig lagerstabile konzentrierte Farbstofflösungen erhält.

Die 1:2-Chromkomplexfarbstoffe der Formel (I), die in Form der obengenannten hydrophoben Amine in organischen Lösungsmitteln gut löslich sind, können zum Färben von organischen Flüssigkeiten, Harzen oder Lacken, von Holzbeizen, Kugelschreiberpasten oder Tinten verwendet werden.

Die 1:2-Chromkomplexfarbstoffe der Formel (I), gegebenenfalls begleitet von ihren symmetrischen 1:2-Chromkomplexfarbstoffen, die aufgrund des Kations gut wasserlöslich sind, eignen sich zum Färben und Bedrucken der verschiedensten Stoffe, vor allem zum Färben von natürlichen und synthetischen amidgruppenhaltigen Materialien, wie Wolle, Seide, Leder, Polyamid- und Polyurethanfaser. Sie werden bevorzugt in schwach saurem bis schwach alaklischem Bad, insbesondere in essigsaurem Bad, eingesetzt, wo sie gleichmäßig auf das Substrat aufziehen und licht- und gebrauchsechte Färbungen liefern.

Die 1:2-Chromkomplexfarbstoffe der Formel (I) und besonders ihre Gemische mit den dazugehörigen symmetrischen Komplexfarbstoffen der Formeln (VI) und (VII) lassen sich besonders vorteilhaft zum Färben

und Imprägnieren von Leder verwenden. Auf Lederfabrikaten unterschiedlicher Farbstoffaffinität, wie Chromleder, verschieden nachgegerbte Leder oder Veloursleder vom Rind oder Schwein, ziehen sie gut auf. Sie bauen mit zunehmendem Farbstoffangebot gut auf und geben kräftige orange bis blaustichig rote Färbungen. Bei Sättigung der Leder sind keine Bronzierungseffekte zu befürchten.

Die flüssigen Zubereitungen der erfindungsgemaßen Farbstoffe der Formel (I) und insbesondere der Gemische aus (I), (VI) und (VII) eignen sich sowohl zum Faßfärben als auch zum Besprühen und Imprägnieren von Leder. Beim Färben auf Durchlauf-Maschinen beispielsweise vom Typ MULTIMA® zeichnen sie sich durch eine gute Penetration und eine gute Bindung zum Substrat aus.

Beispiel 1

0,1 Mol Azofarbstoff aus diazotiertem 6-Nitro-2-amino-1-hydroxybenzol-4-sulfonamid und 1-Phenyl-3-methyl-5-pyrazolon und 0,1 Mol Chrom-1:1-Komplex des Farbstoffes aus diazotierter 6-Nitro-2-amino-1-hydroxy-4-sulfonsäure und der gleichen Kupplungskomponente werden in 800 ml Wasser verrührt. Man erhitzt das Gemisch auf 85°C und hält den pH durch Zutropfen von 40 - 50 ml 5 n Natronlauge bei 8,0-8,5. Nach etwa 1 Stunde sind die beiden Ausgangsverbindungen vollständig verschwunden. Der gebildete Chrommischkomplex der Formel

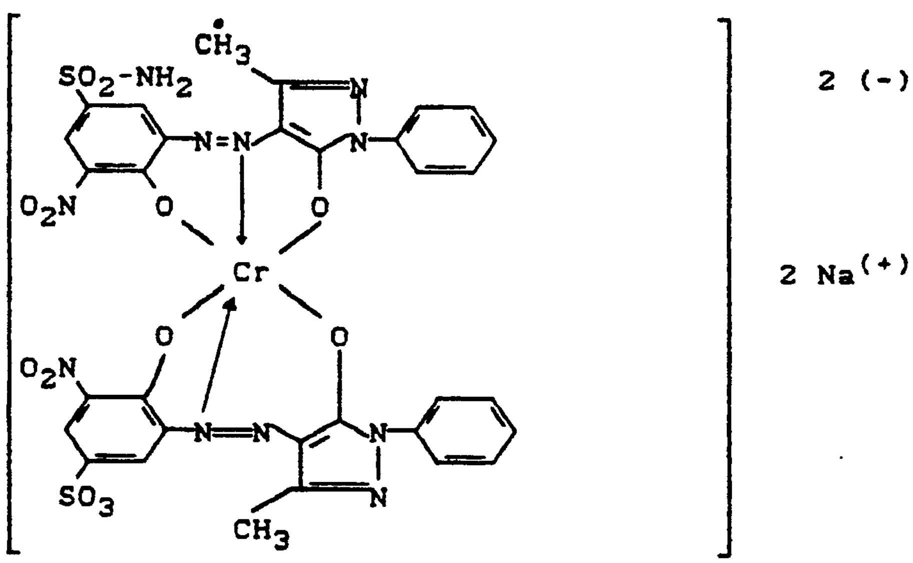

wird durch Aussalzen und Filtration isoliert und getrocknet. Man erhält ein rotbraunes Pulver, welches Wolle, Polyamid und Leder in lichtechten roten Tönen färbt.

Beispiel 2

0,1 Mol Azofarbstoff aus diazotiertem 6-Nitro-2-amino-1-hydroxybenzol-4-sulfonamid und 1-Phenyl-3-methyl-5-pyrazolon und 0,1 Mol Azofarbstoff aus diazotierter 6-Nitro-2-amino-1-hydroxybenzol-4-sulfonsäure und der gleichen Kupplungskomponente werden in 600 ml Wasser angerührt und mit 250 ml einer Natriumchromsalicylat-Lösung (entsprechend 5,2 g Chrom) versetzt. Man kocht das Gemisch 90 Minuten lang unter Rückfluß, bis beide Ausgangsfarbstoffe verschwunden sind. Am Ende der Reaktion wird das Gemisch chromhaltiger Farbstoffe durch Eindunsten vom Wasser befreit. Der trockene Rückstand stellt nach dem Mahlen ein dunkelbraunes Pulver dar, welches Leder gut einfärbt und brillante rote Färbungen liefert.

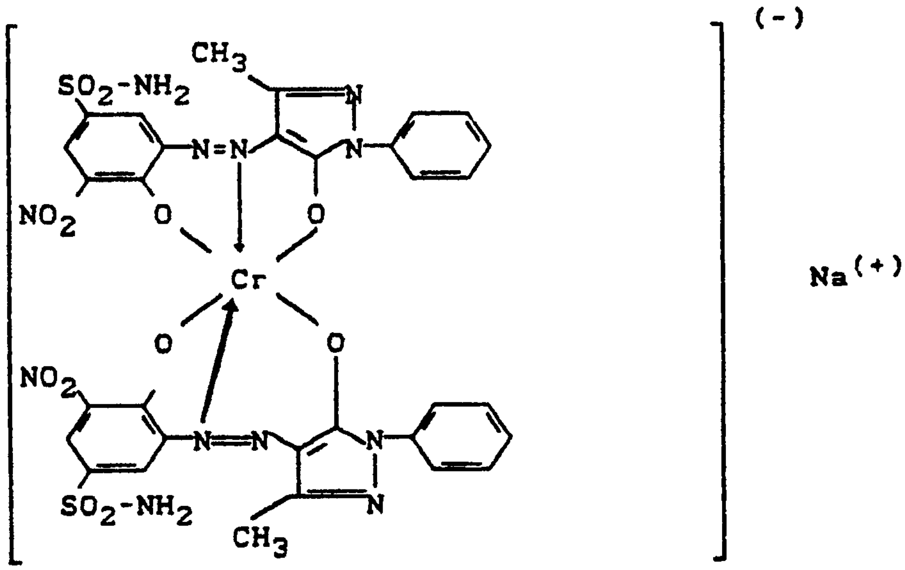

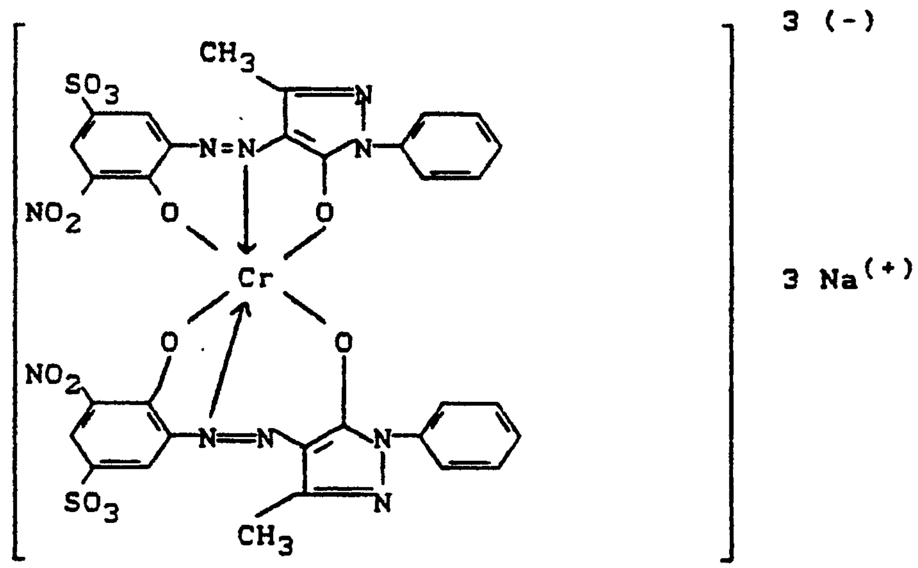

+

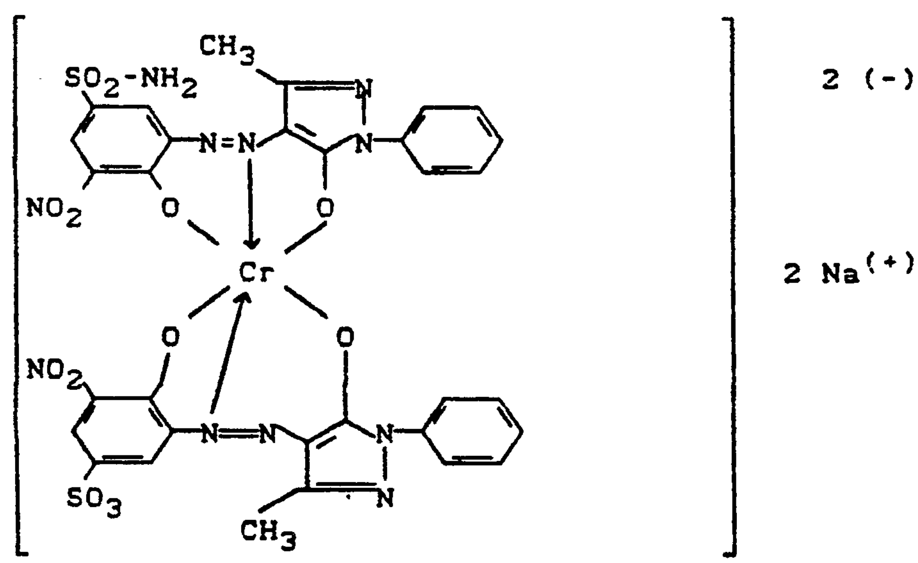

Beispiel 3

Je 0,1 Mol der beiden Azofarbstoffe aus diazotiertem 6-Nitro-2-amino-1-hydroxybenzol-4-sulfonamid und 1-Phenyl-3-methyl-5-pyrazolon und aus diazotierter 6-Nitro-2-amino-1-hydroxy-4-sulfonsäure und 1-(4-Methylphenyl)-3-methyl-5-pyrazolon werden als feuchte Preßkuchen in 400 ml 1-Ethoxy-2-propanol angerührt. Man fügt 0,1 Mol basisches Chromacetat zu, erwärmt die Suspension auf 100 ° C und trägt während des Aufheizens 10,5 g $LiOH.H_2O$ ein. Das Gemisch wird dann etwa 2 Stunden lang bei 100 ° C gerührt, bis beide Ausgangsfarbstoffe vollständig chromiert sind. Es entsteht eine tiefrote Lösung der chromhaltigen Farbstoffe der Formel

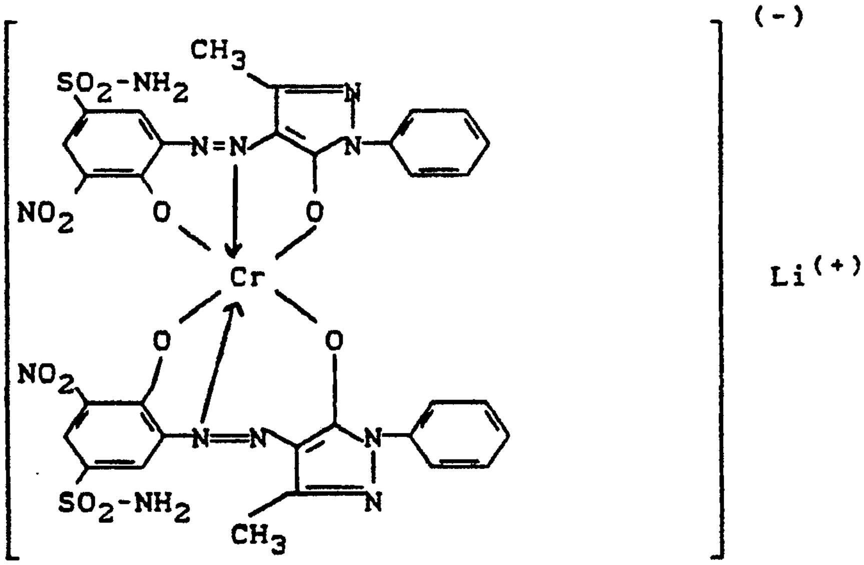

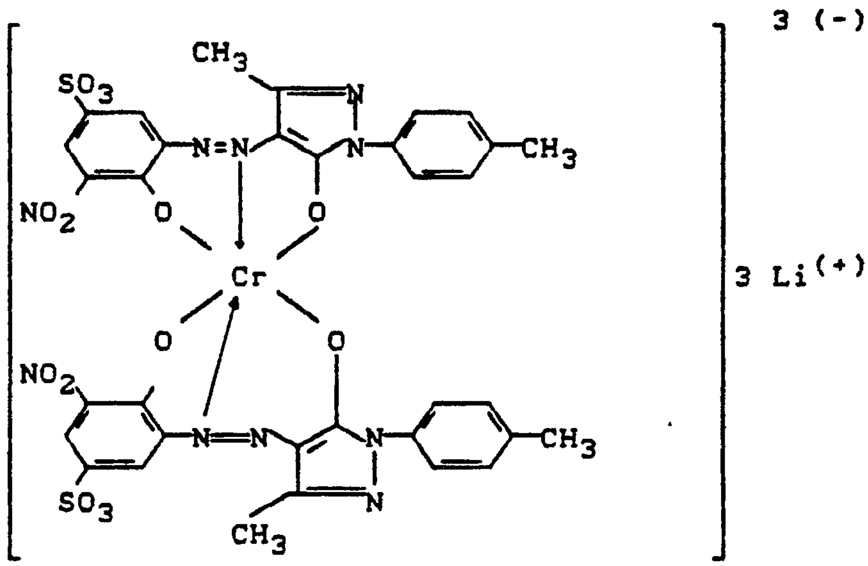

+

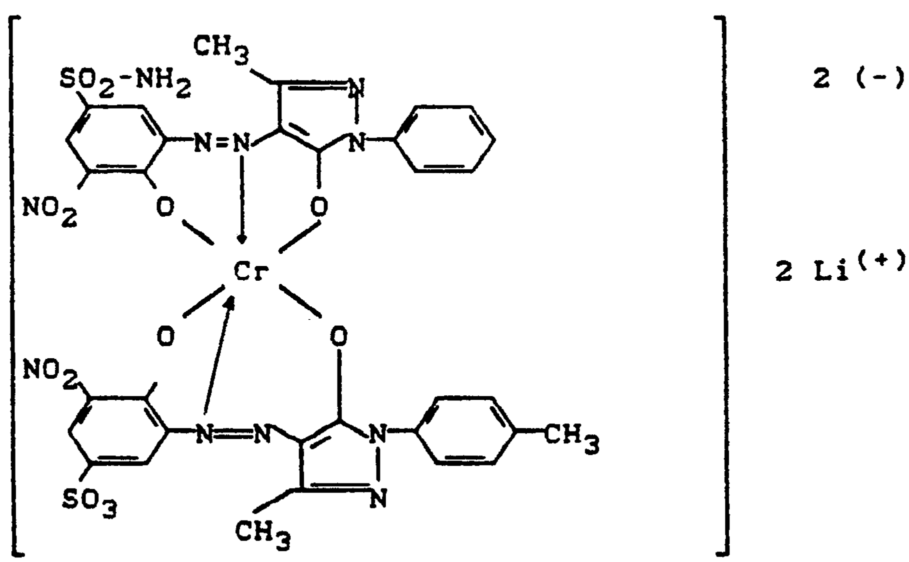

Sie wird nach Abkühlen auf Raumtemperatur geklärt. Das Filtrat ist eine lagerstabile Lösung, mit der man auf Leder nach verschiedenen Verfahren brillante rote Färbungen mit guten Lichtechtheiten erzielen kann.

Beispiele 4 bis 26

Auf ähnliche Weise werden über Chrom-1:1-komplexe oder durch Mischchromierung Pulver oder Lösungen von wertvollen 1:2-Chromkomplexfarbstoffen gewonnen, wenn man von den metallisierbaren Azofarbstoffen (1) und (2) der folgenden Tabelle ausgeht. Die Nuance der resultierenden chromhaltigen Farbstoffe ist in der letzten Spalte angegeben.

Tabelle

| Nr. | Farbstoff (1) | Farbstoff (2) | Farbton |
|---|---|---|---|
| 4 | 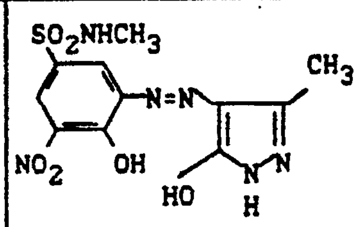 | 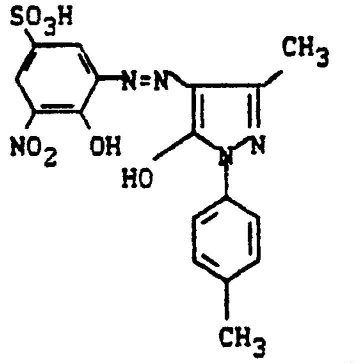 | rot |
| 5 | 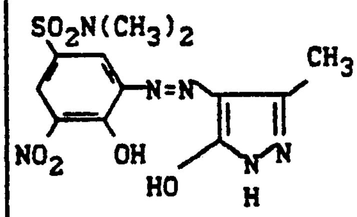 | do | rot |
| 6 | 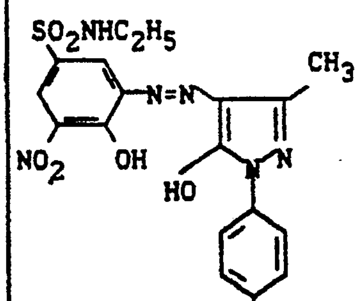 | 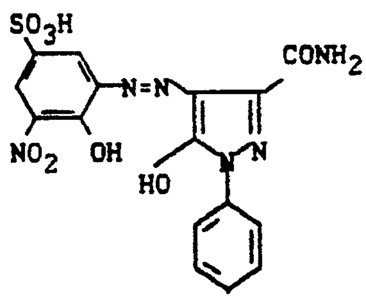 | rot |
| 7 | 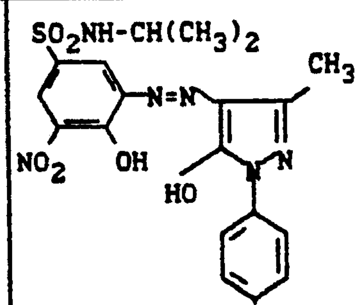 | 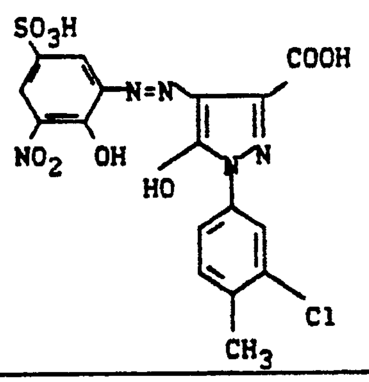 | rot |

T a b e l l e

| Nr. | Farbstoff (1) | Farbstoff (2) | Farbton |
|---|---|---|---|
| 8 | 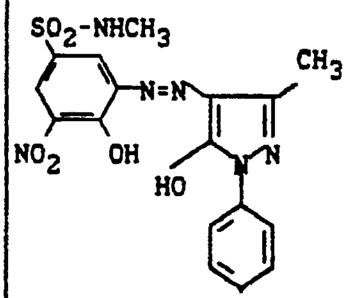 | 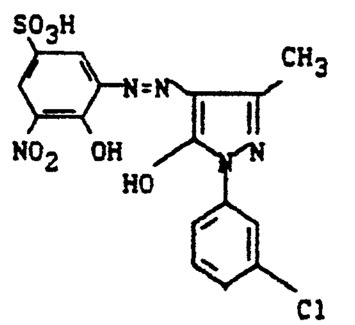 | rot |
| 9 | 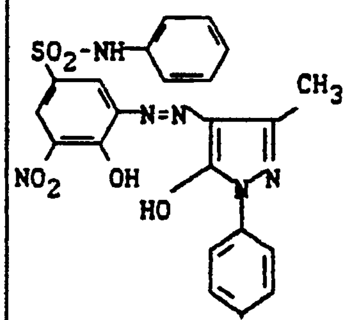 | 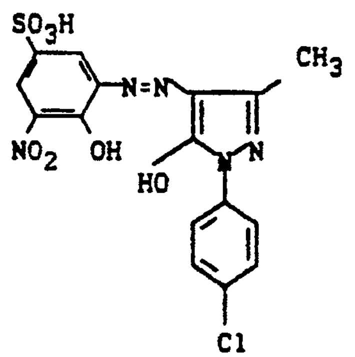 | rot |
| 10 | 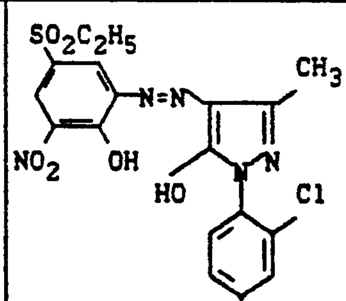 | 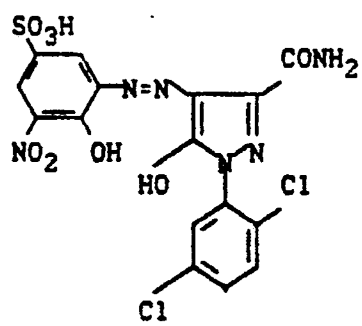 | rot |
| 11 | 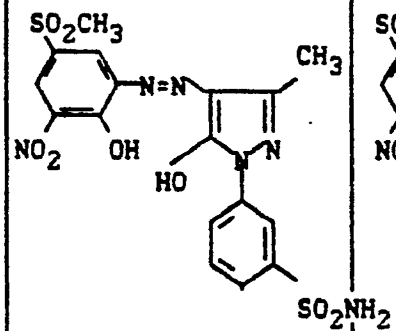 | 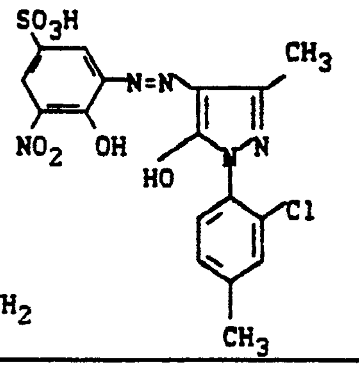 | rot |

T a b e l l e

| Nr. | Farbstoff (1) | Farbstoff (2) | Farbton |
|---|---|---|---|
| 12 | 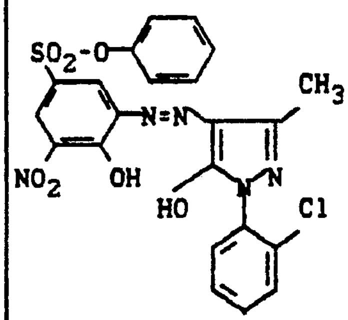 | 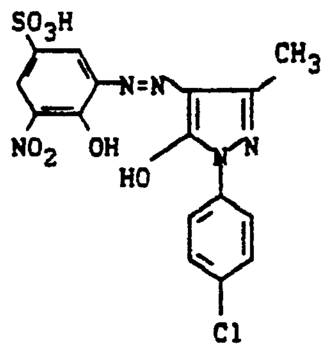 | rot |
| 13 | 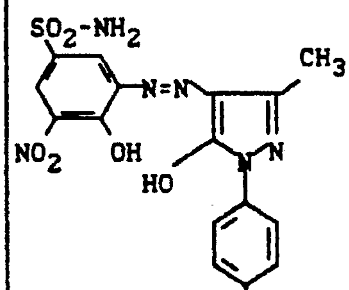 | 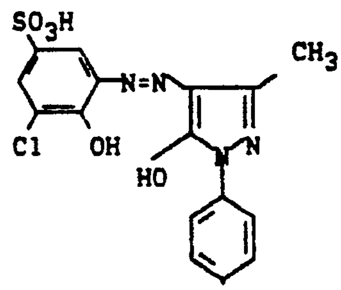 | gelbstichig rot |
| 14 | 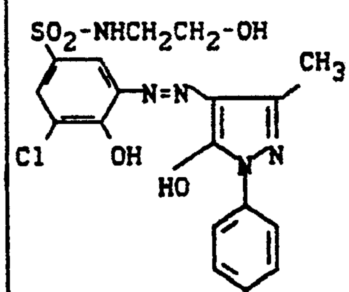 | 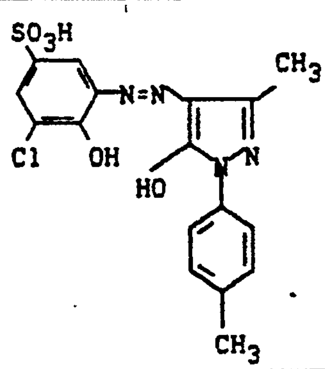 | gelbstichig rot |
| 15 | 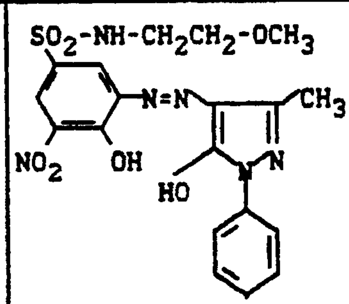 | 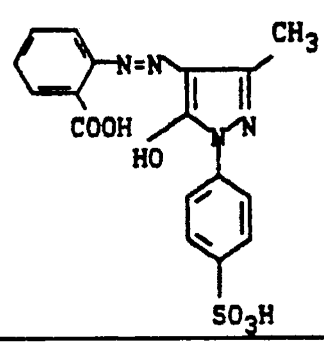 | orange |

**Tabelle**

| Nr. | Farbstoff (1) | Farbstoff (2) | Farbton |
|---|---|---|---|
| 16 | 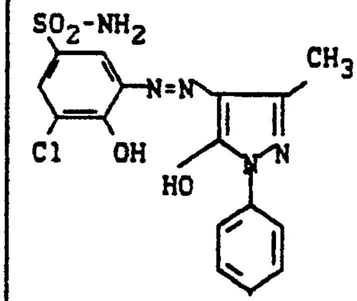 | 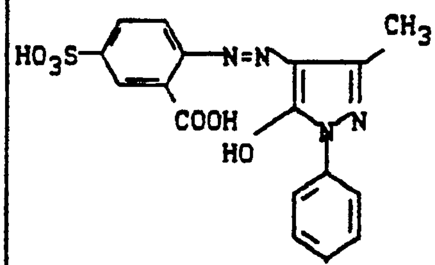 | orange |
| 17 | 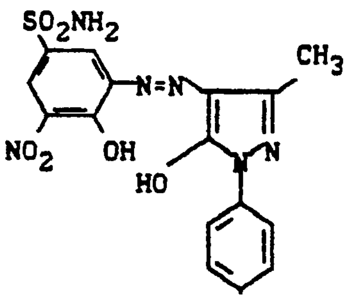 | 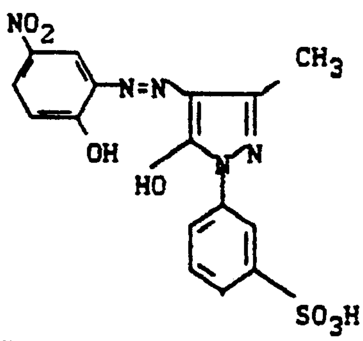 | gelb-stichig rot |
| 18 | 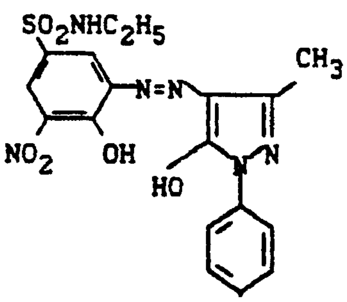 | 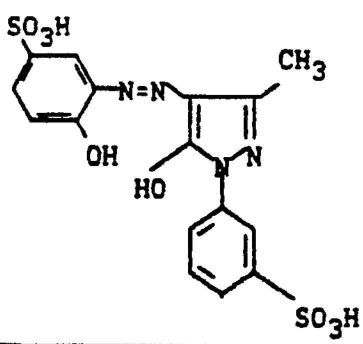 | gelb-stichig rot |
| 19 | 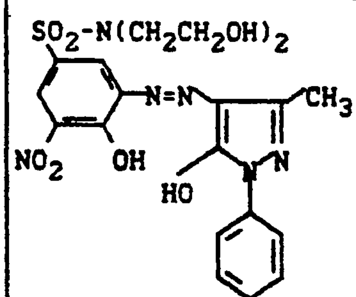 | 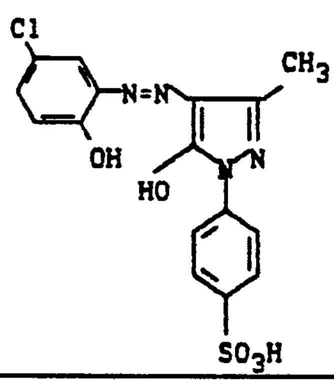 | rot |

**Tabelle**

| Nr. | Farbstoff (1) | Farbstoff (2) | Farbton |
|---|---|---|---|
| 20 | 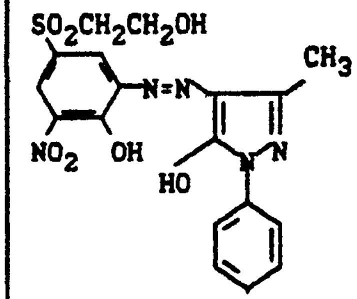 | 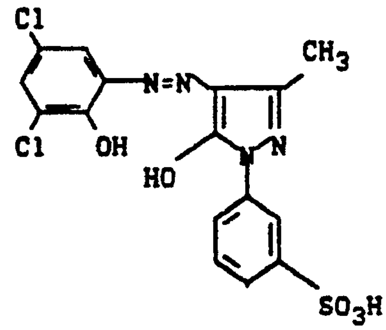 | rot |
| 21 | 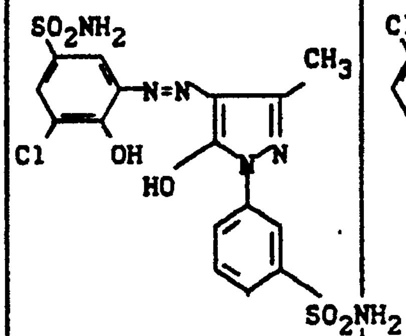 | 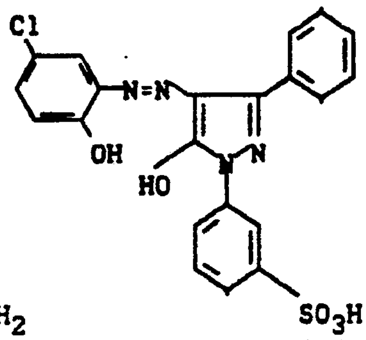 | gelbstichig rot |
| 22 | 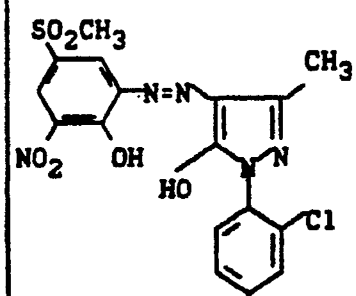 | 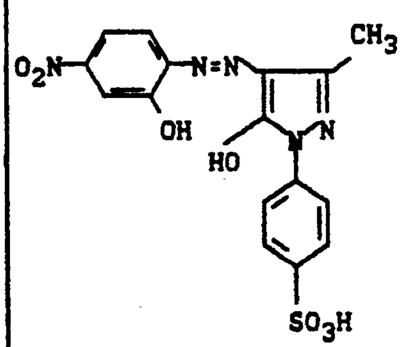 | rot |
| 23 | 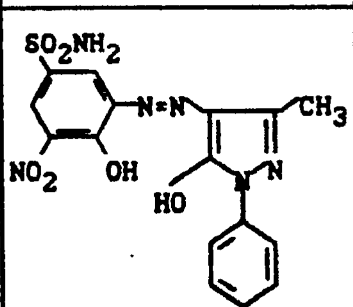 | 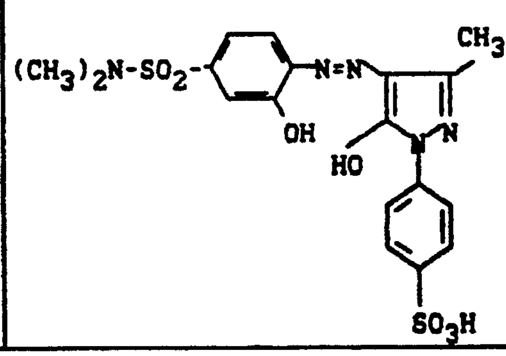 | rot |

T a b e l l e

| Nr. | Farbstoff (1) | Farbstoff (2) | Farbton |
|---|---|---|---|
| 24 | 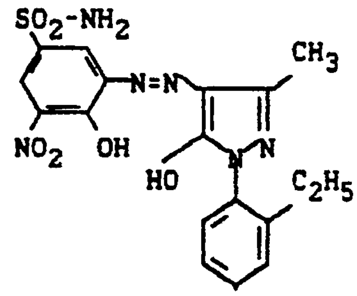 | 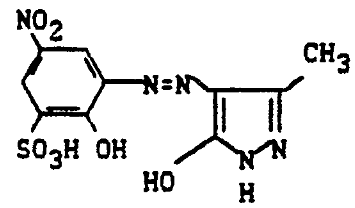 | gelb-stichig rot |
| 25 | 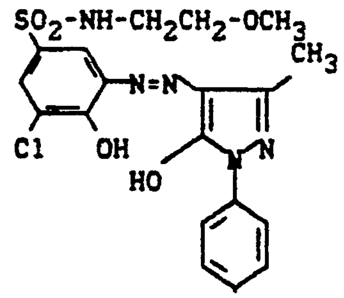 | 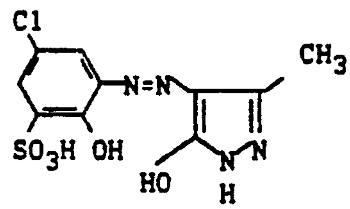 | gelb-stichig rot |
| 26 | 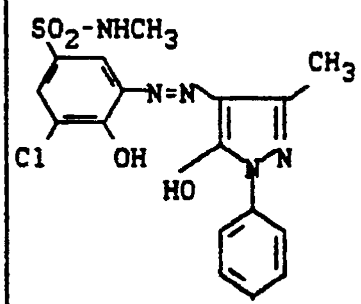 | 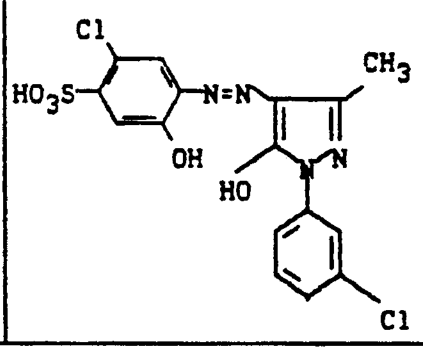 | gelb-stichig rot |

## Patentansprüche

1. Asymmetrische 1:2-Chromkomplexfarbstoffe der Formel

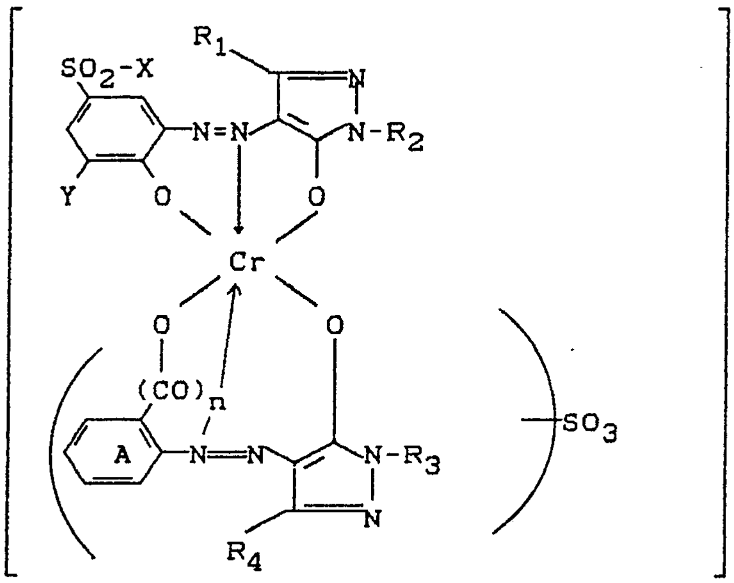

2 (-)

(I)

2 $Ka^{(+)}$

worin

| | |
|---|---|
| X | $NH_2$, durch Alkyl, Cycloalkyl, Aralkyl oder Aryl mono- oder disubstituiertes $NH_2$, Aryloxy oder Alkyl, |
| Y | $NO_2$ oder Cl, |
| $R_1$, $R_4$ | Alkyl, Aryl, COOH, Carbamoyl, CN oder Carbonsäureester, |
| $R_2$, $R_3$ | H, Alkyl oder Aryl, |
| n | 0 oder 1 und |
| $Ka^{(+)}$ | ein Kation bedeuten, |

die Sulfogruppe an Ring A oder an $R_3$, falls dieses für Aryl steht, gebunden ist, und Ring A und die Reste $R_2$, $R_3$, sofern diese für Aryl stehen, gegebenenfalls substituiert sind.

**2.** Farbstoffe nach Anspruch 1, dadurch gekennzeichnet, daß A und/oder einer oder beide Reste $R_2$ und $R_3$, sofern sie für Aryl stehen, durch Acylamino, Sulfamoyl, Carbamoyl, Alkylsulfonyl, Arylsulfonyl, Alkyl, Alkoxy, $NO_2$ oder Cl substituiert sind.

**3.** Farbstoffe des Anspruchs 1 der Formel

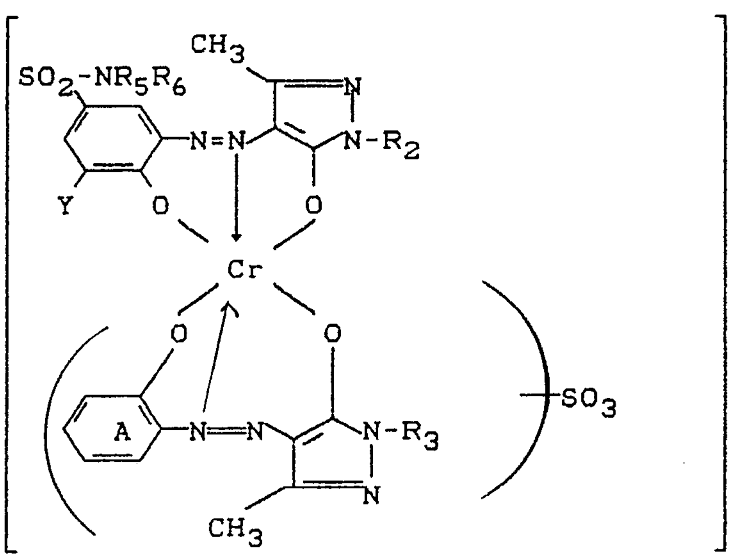

2 (-)

(II)

2 $Ka^{(+)}$

worin

$R_5$ = H oder Alkyl
$R_6$ = H, Alkyl oder Aryl

bedeutet.

**4.** Farbstoffe des Anspruchs 1 der Formel

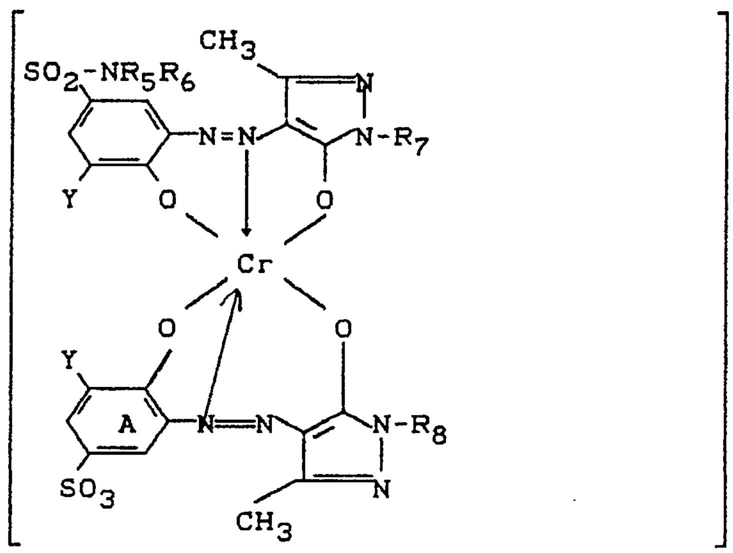

2 (-)

(III)

$2\ Ka^{(+)}$

wobei

$R_5$ für H oder Alkyl,
$R_6$ für H, Alkyl oder Aryl und
$R_7$ und $R_8$ für H oder

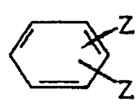

stehen, und

Z, Z' = H, Cl oder $CH_3$, und beide Y gleichzeitig für Cl oder $NO_2$ stehen.

**5.** Farbstoffe des Anspruchs 3 mit Y = $NO_2$ wobei $R_7$ und $R_8$ die gleiche Bedeutung haben.

**6.** Farbstoffgemische, erhältlich durch Mischchromierung von Farbstoffen der Formel

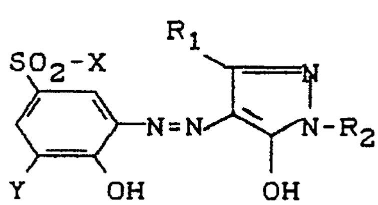

(IV)

worin

X $NH_2$, durch Alkyl, Cycloalkyl, Aralkyl oder Aryl mono- oder disubstituiertes $NH_2$, Aryloxy oder Alkyl,
Y $NO_2$ oder Cl,

$R_1$ Alkyl, Aryl, COOH, Carbamoyl, CN oder Carbonsäureester,
$R_2$ H, Alkyl oder Aryl,
und Farbstoffen der Formel

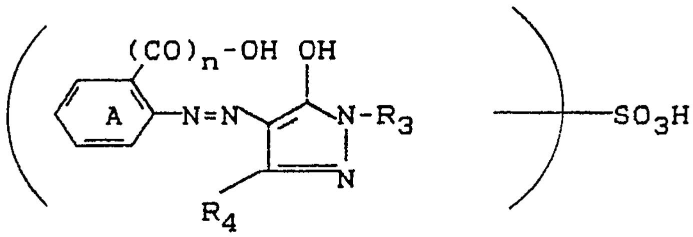

(V)

worin
$R_4$ Alkyl, Aryl, COOH, Carbamoyl, CN oder Carbonsäureester,
$R_3$ H, Alkyl oder Aryl,
die Sulfogruppe an Ring A oder an $R_3$, falls dieses für Aryl steht, gebunden ist, und Ring A und die Reste $R_2$, $R_3$, sofern diese für Aryl stehen, gegebenenfalls substituiert sind.

7. Farbstoffgemische nach Anspruch 6, dadurch gekennzeichnet, daß A und/oder einer oder beide Reste $R_2$ und $R_3$, sofern sie für Aryl stehen, durch Acylamino, Sulfamoyl, Carbamoyl, Alkylsulfonyl, Arylsulfonyl, Alkyl, Alkoxy, $NO_2$ oder Cl substituiert sind.

8. Verwendung der Farbstoffe der Ansprüche 1 bis 7 zum Färben und Bedrucken von natürlichen und synthetischen amidgruppenhaltigen Materialien.

**Claims**

1. Asymmetric 1:2 chromium complex dyestuffs of the formula

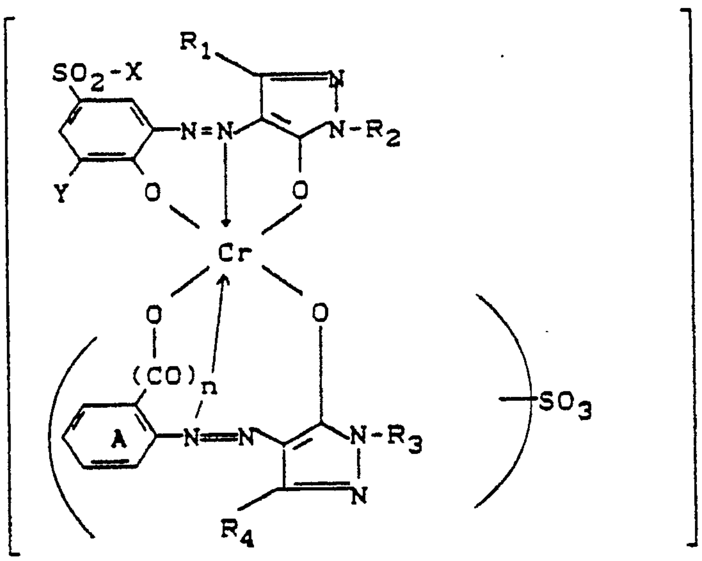

2 (-)

(I)

2 Cat(+)

in which
X denotes $NH_2$, $NH_2$ which is mono- or disubstituted by alkyl, cycloalkyl, aralkyl or aryl, or denotes aryloxy or alkyl,
Y denotes $NO_2$ or Cl,
$R_1$, $R_4$ denote alkyl, aryl, COOH, carbamoyl, CN or carboxylic esters,
$R_2$, $R_3$ denote H, alkyl or aryl,
n denotes 0 or 1 and

$Cat^{(+)}$ denotes a cation,
the sulpho group is bound to ring A or to $R_3$, if the latter represents aryl, and ring A and the radicals $R_2$, $R_3$, if the latter represent aryl, are substituted or unsubstituted.

2. Dyestuffs according to Claim 1, characterised in that A and/or one or both of the radicals $R_2$ and $R_3$, if they represent aryl, are substituted by acylamino, sulphamoyl, carbamoyl, alkylsulphonyl, arylsulphonyl, alkyl, alkoxy, $NO_2$ or Cl.

3. Dyestuffs of Claim 1 of the formula

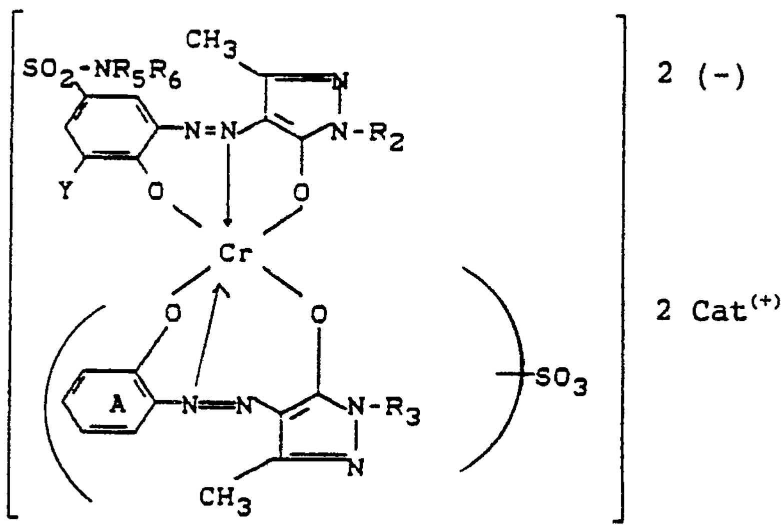

(II)

in which
$R_5$ = H or alkyl,
$R_6$ = H, alkyl or aryl.

4. Dyestuffs of Claim 1 of the formula

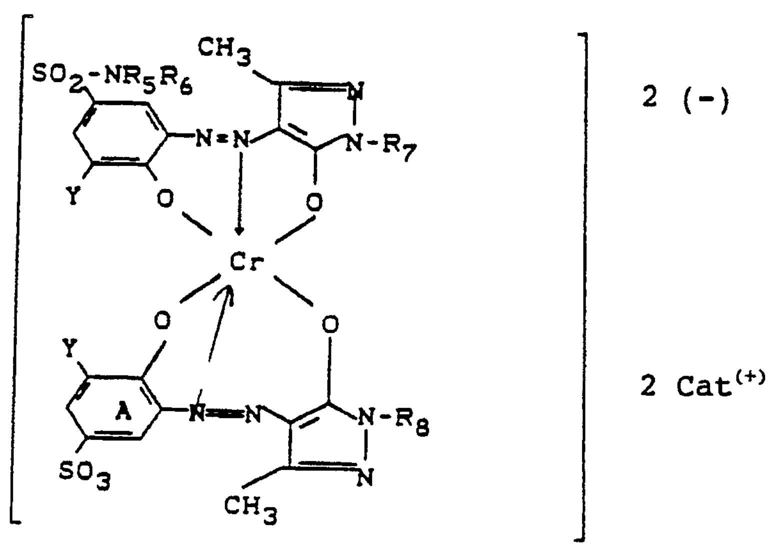

(III)

in which
$R_5$ represents H or alkyl,
$R_6$ represents H, alkyl or aryl and
$R_7$ and $R_8$ represent H or

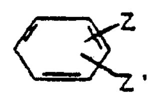

and

Z, Z' = H, Cl or $CH_3$ and both Y simultaneously represents Cl or $NO_2$.

**5.** Dyestuffs of Claim 3 where Y is $NO_2$ and $R_7$ and $R_8$ have the same meaning.

**6.** Dyestuff mixtures obtainable by mixed chroming of dyestuffs of the formula

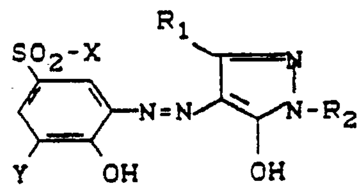

(IV)

in which

X $NH_2$, $NH_2$ which is mono- or disubstituted by alkyl, cycloalkyl, aralkyl or aryl, or denotes aryloxy or alkyl,

Y $NO_2$ or Cl,

$R_1$ alkyl, aryl, COOH, carbamoyl, CN or carboxylic ester,

$R_2$ H, alkyl or aryl,

and dyestuffs of the formula

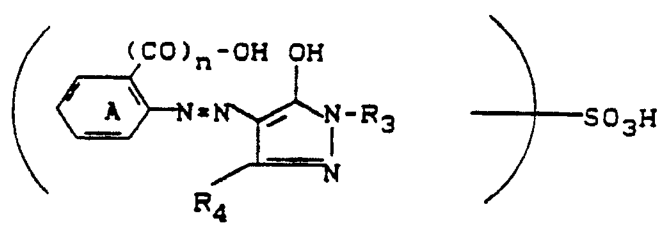

(V)

in which

$R_4$ alkyl, aryl, COOH, carbamoyl, CN or carboxylic ester,

$R_3$ H, alkyl or aryl,

the sulpho group is bound to ring A or to $R_3$, if the latter represents aryl, and ring A and the radicals $R_2$, $R_3$, if the latter represent aryl, are substituted or unsubstituted.

**7.** Dyestuff mixtures according to Claim 6, characterised in that A and/or one or both of the radicals $R_2$ and $R_3$, if they represent aryl, are substituted by acylamino, sulphamoyl, carbamoyl, alkylsulphonyl, arylsulphonyl, alkyl, alkoxy, $NO_2$ or Cl.

**8.** Use of the dyestuffs of Claims 1 to 7 for the dyeing and printing of natural and synthetic amidocontaining materials.

## Revendications

**1.** Colorants complexes de chrome 1:2 asymétriques de formule

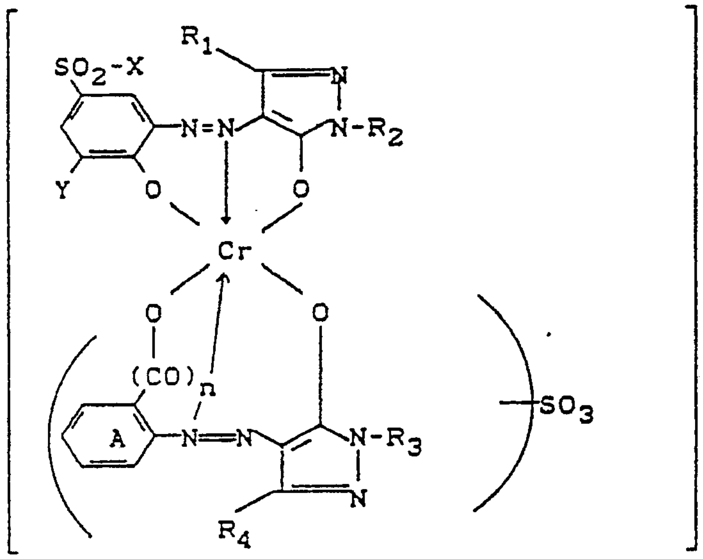

2 (-)

(I)

2 $Cat^{(+)}$

dans laquelle
X représente $NH_2$, $NH_2$ mono- ou disubstitué par alkyle, cycloalkyle, arylalkyle ou aryle, aryloxy ou alkyle,
Y représente $NO_2$ ou Cl,
$R_1$, $R_4$ représentent alkyle, aryle, COOH, carbamoyle, CN ou ester d'acide carboxylique,
$R_2$, $R_3$ représentent H, alkyle ou aryle,
n représente 0 ou 1 et
$Cat^{(+)}$ représente un cation,
le groupe sulfo est lié au noyau A ou à $R_3$, dans le cas où celui-ci représente un groupe aryle, et le noyau A et les restes $R_2$, $R_3$, pour autant que ceux-ci représentent des groupes aryles, sont éventuellement substitués.

2. Colorants selon la revendication 1, caractérisés en ce que A et/ou l'un des restes $R_2$ et $R_3$ ou les deux, pour autant que ceux-ci représentent des groupes aryles, sont substitués par acyl-amino, sulfamoyle, carbamoyle, alkylsulfonyle, arylsulfonyle, alkyle, alcoxy, $NO_2$ ou Cl.

3. Colorants selon la revendication 1, de formule

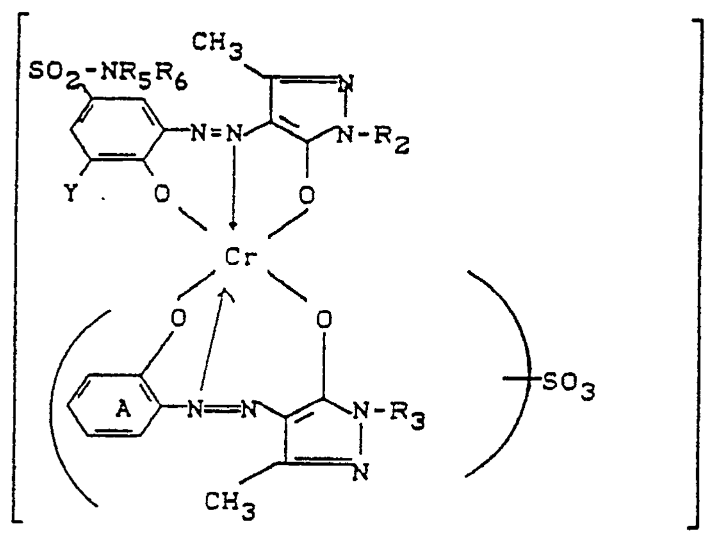

2 (-)

(II)

2 $Cat^{(+)}$

dans laquelle

$R_5$ représente H ou un groupe alkyle et
$R_6$ représente H ou un groupe alkyle ou aryle.

**4.** Colorants selon la revendication 1, de formule

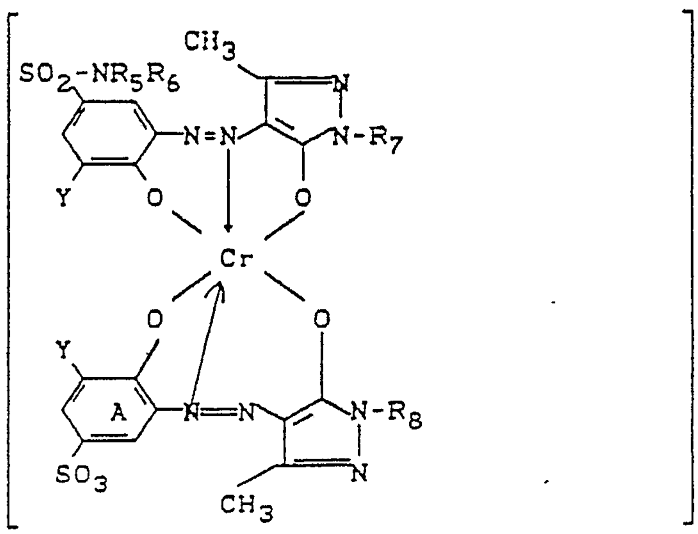

2 (-)

(III)

$2\ Cat^{(+)}$

dans laquelle
$R_5$ représente H ou un groupe alkyle,
$R_6$ représente H ou un groupe alkyle ou aryle et
$R_7$ et $R_8$ représentent H ou

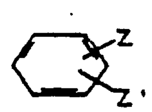

et Z, Z' = H, Cl ou $CH_3$ et les deux Y de la formule (III) représentent en même temps Cl ou $NO_2$.

**5.** Colorants selon la revendication 3, caractérisés en ce que Y est $NO_2$ et $R_7$ et $R_8$ sont les mêmes.

**6.** Mélanges de colorants, accessibles par chromage mixte de colorants de formule

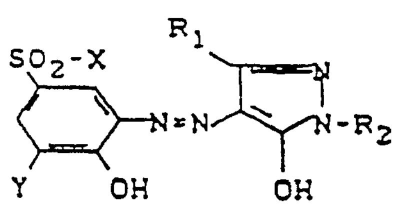

(IV)

dans laquelle
X représente $NH_2$, $NH_2$ mono- ou disubstitué par alkyle, cycloalkyle, arylalkyle ou aryle, aryloxy ou alkyle,
Y représente $NO_2$ ou Cl,
$R_1$ représente alkyle, aryle, COOH, carbamoyle, CN ou ester d'acide carboxylique,
$R_2$ représente H, alkyle ou aryle,
et de colorants de formule

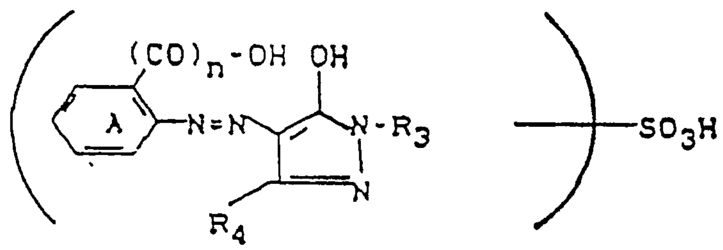

(V)

dans laquelle
$R_4$ représente alkyle, aryle, COOH, carbamoyle, CN ou ester d'acide carboxylique,
$R_3$ représente n, alkyle ou aryle,
le groupe sulfo est lié au noyau A ou à $R_3$, dans le cas où celui-ci représente un groupe aryle, et le noyau A et les restes $R_2$, $R_3$, pour autant que ceux-ci représentent des groupes aryles, sont éventuellement substitués.

7. Mélanges de colorants selon la revendication 6, caractérisés en ce que A et/ou l'un des restes $R_2$ et $R_3$ ou les deux, pour autant que ceux-ci représentent des groupes aryles, sont substitués par acylamino, sulfamoyle, carbamoyle, alkylsulfonyle, arylsulfonyle,alkyle, alcoxy, $NO_2$ ou Cl.

8. Utilisation des colorants selon les revendications 1 à 7, pour la teinture et l'impression de matières naturelles et synthétiques à groupes amides.